# EUROPEAN PATENT SPECIFICATION

(11) **EP 2 353 978 B1**
(45) Date of publication and mention of the grant of the patent: **23.10.2013**
(21) Application number: 11152363.5
(22) Date of filing: 27.01.2011
(51) Int. Cl.: B62H 1/02, B62H 1/06

(54) **Telescopic bicycle kickstand structure**
Teleskopische Fahrradkippständerstruktur
Structure télescopique de béquille de bicyclette

(30) Priority: 03.02.2010 IT PD20100002 U
(43) Date of publication of application: 10.08.2011
(73) Proprietor: Ursus S.P.A., 36027 Rosa' VI (IT)
(72) Inventor: Ferronato, Sergio, 36027 Rosa' VI (IT)
(74) Representative: Modiano, Micaela Nadia

(56) References cited:
- CN-Y- 2 693 608
- CN-Y- 2 818 283
- DE-A1-102006 060 696
- GB-A- 699 252
- NL-C1- 1 032 207
- TW-U- M 268 259
- US-A1- 2006 157 625

## Description

The present invention relates to a telescopic bicycle kickstand structure.

Nowadays telescopic bicycle kickstands are known which are constituted by a bracket for fixing to the lower part of a bicycle frame, such as a city bike, mountain bike and the like, which bracket is articulated to a telescopic leg with a foot for resting on the ground.

The leg is constituted by a first tubular element, which is hinged to the bracket, and a second tubular element, which has such resting foot; the second tubular element is partly inserted into the first tubular element and it can be extracted therefrom and inserted therein for elongating or shortening, at will, the telescopic leg.

Such a telescopic bicycle stand has reversible means for locking the position of the second tubular element with respect to the first.

Such locking means are provided by a screw which is located so as to pass, at a certain point and in a substantially radial direction, through the wall of the first tubular element, so as to be pressed against the underlying second tubular element, thus retaining it in the selected position.

Such telescopic bicycle kickstands, although they are widespread and appreciated, present some room for improvement.

Indeed, such bicycle kickstands do not offer any protection against impacts caused by the pedal crank which abuts against the leg when it is in the lowered configuration of use.

Such impacts, even if they do not immediately endanger the leg, can immediately damage its aesthetic impact, especially with bicycle kickstands of a certain level of quality, and scratch it or break it after frequent impacts.

Telescopic bicycle kickstands are in and of themselves already quite complex compared to normal, non-extendable bicycle kickstands, and they require the use of a screw to lock the selected extended configuration; this screw presents a relatively hazardous element for a user, since if it is badly positioned and protrudes excessively, it can cause injury to the user who uses the bicycle kickstand improperly, or it can become entangled with a shoelace or the hem of a trouser leg or other garment.

The addition of a protective element to the leg of the bicycle kickstand, if such addition is implemented with one or more additional threaded elements, would make assembling the bicycle kickstand even more complex and burdensome, and the bicycle kickstand itself potentially more dangerous.

NL1032207 discloses a telescopic bicycle kickstand having a combination of features as set forth in the pre-characterizing portion of the amended claim 1.

The aim of the present invention is to provide a telescopic bicycle kickstand structure that is better protected from impacts by the pedal crank and at the same time is safer than similar known bicycle kickstands.

Within this aim, an object of the invention is to provide a telescopic bicycle kickstand structure with levels of performance at least as high as those of known similar bicycle kickstands, which at the same time is simpler and cheaper than known similar bicycle kickstands.

Another object of the invention is to provide a telescopic bicycle kickstand structure, which can be extended or shortened with the same ease as known bicycle kickstands.

Another object of the invention is to provide a telescopic bicycle kickstand structure that can be produced using known systems and techniques.

In accordance with the invention, there is provided a telescopic bicycle kickstand structure as defined in the appended claims.

Further characteristics and advantages of the invention will become better apparent from the following detailed description of a preferred, but not exclusive, embodiment of the telescopic bicycle kickstand structure according to the invention, illustrated by way of non-limiting example in the accompanying drawings, wherein:

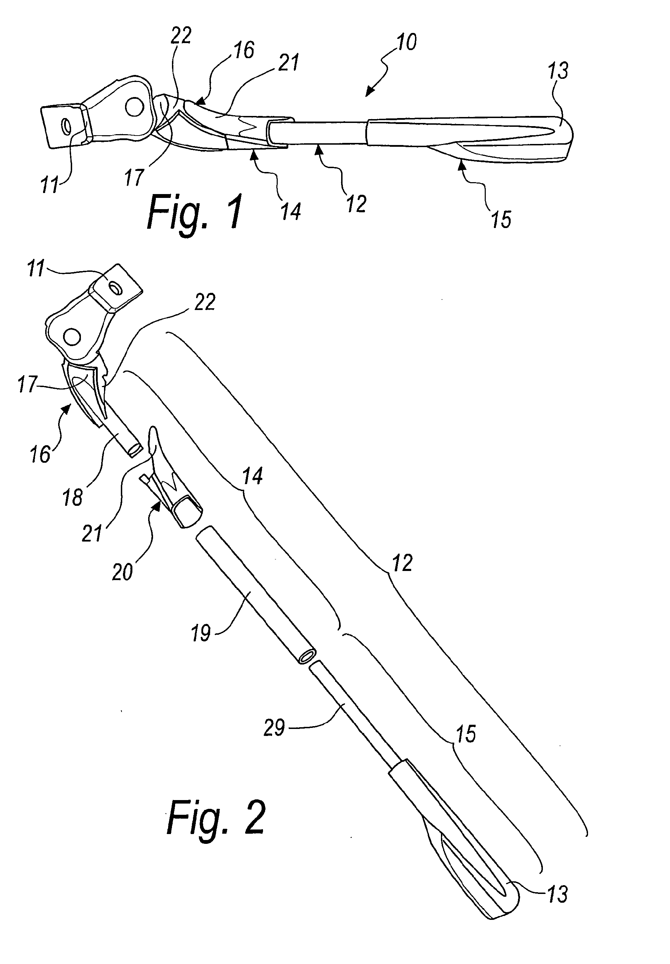

Figure 1 is a perspective view of a bicycle kickstand structure according to the invention;
Figure 2 is an exploded view of Figure 1;
Figure 3 is a sectional side view of a first detail of the bicycle kickstand structure according to the invention;
Figure 4 is another perspective view of the bicycle kickstand structure according to the invention;
Figure 5 is a sectional side view of a second detail of the bicycle kickstand structure according to the invention.

A telescopic bicycle kickstand structure according to the invention is generally indicated by the reference numeral 10.

The telescopic bicycle kickstand structure 10 comprises a bracket 11 for fixing to the lower part of a bicycle frame, which bracket 11 is articulated to a telescopic leg 12 with a foot 13 for resting on the ground.

The telescopic leg 12 comprises a first element 14 which is coupled to the bracket 11, and a second element 15 which can be telescopically extended from the first element 14 and comprises the resting foot 13.

There are reversible means for locking the position of the second element 15 with respect to the first element 14.

The first element 14 comprises a first part 16 which is hinged to the bracket 11, which first part 16 is constituted in turn by a hinged head 17 from which a clutch portion 18 extends which is shaped for pressing into a second, tubular part 19 of the first element 14.

Locked between the first part 16 and the second part 19 of the first element 14, so as to surround the region of coupling between the clutch portion 18 and a first section of the second part 19, there is an upper sleeve 20, for protecting the leg 13, in the lowered configuration of use, from being struck by an improperly-rotated pedal crank of the bicycle.

The sleeve 20 has one end 21 which is shaped so as to complement an abutment portion 22 which is defined on the hinged head 17, and has corresponding contiguous tubular seats on its inside, a first seat 23 for the section 18a of the clutch portion 18 which remains outside the second part 19, and a second seat 24 for an end section 25 of the second part 19.

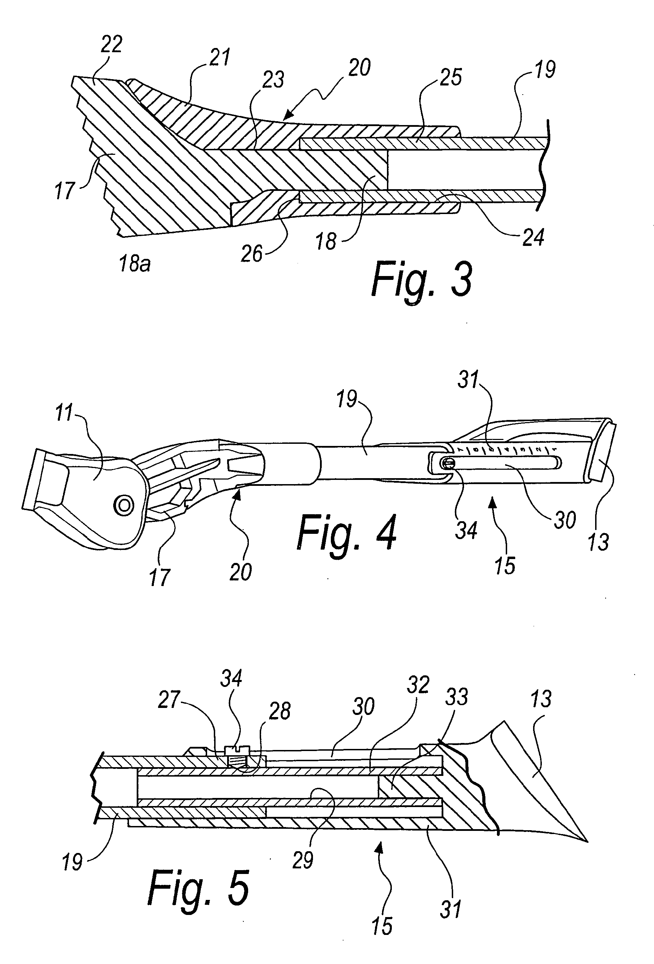

The inner shoulder 26 which is provided by the difference in section between the tubular seats 23 and 24, clearly visible in the sectional view in Figure 3, defines an anti-unthreading abutment for the sleeve 20 in the direction of unthreading from the hinged head 17.

The upper protection sleeve 20 of the leg 13 is therefore retained on the leg 13 not by means of screws, but simply by interposition between two abutments that prevent it from performing a translational motion both in one direction and in the opposite direction, i.e. the abutment portion 22 in the hinged head 17 and the inner shoulder 26.

This upper sleeve 20 for protecting the leg 13 is made by molding of plastic material.

The reversible means for locking the position of the second element 15 with respect to the first 14 are provided by a screw 34 which is screwed, in a substantially radial direction, into a corresponding complementarily threaded hole 28 defined on a wall 27 of the tubular second part 19, so as to be screwed against a tubular element 29 of the second element 15 of the leg 13.

In particular, advantageously, the head of the screw 34 is arranged so as to slide inside a protective slot 30 which is defined on a lower sleeve 31 associated with the foot 13.

This protective slot 30 accommodates the relative sliding of the head of the screw 34, which protrudes barely if at all from the wall of the lower sleeve 31 in which the slot 30 is defined; in this way the head of the screw 34 is never in a position that is hazardous to the user and it cannot represent an element in which a user's laces, or trouser legs, or other garment can become entangled.

The tubular element 29 of the second element 15 of the leg 13 is pressed, with an end 32 thereof, onto a corresponding clutch 33 which is defined inside the lower sleeve 31.

The lower sleeve 31 and the foot 13 form a single body, made of plastic material.

In practice it has been found that the invention fully achieves the intended aim and objects.

In particular, with the invention a telescopic bicycle kickstand structure has been provided which is quicker to assemble, although with the upper sleeve it comprises a novel and very useful component for protection against impacts by the pedal crank.

Indeed, the assembly sequence is simple and quick and simply requires pressing of the second tubular part 19 of the first element 14 onto the clutch portion 18 of the first part 16, with the upper sleeve 20 interposed, then composing the second element 15 of the leg 13 by pressing the tubular element 29 onto the corresponding clutch 33 in the lower sleeve 31, and then coupling the first element 14 to the second element 15 to compose the leg 13, locking them with the screw 34.

In addition, with the invention a telescopic bicycle kickstand structure has been provided which is free from protruding screws or other dangerous protrusions, and therefore safer and less hazardous even for a user who is not very careful.

Moreover, with the invention a bicycle kickstand structure has been provided with levels of performance at least as high as those of known similar bicycle kickstands.

Also, with the invention a telescopic bicycle kickstand structure has been provided which can be extended or shortened with the same ease as known bicycle kickstands.

Last but not least, with the invention a telescopic bicycle kickstand structure has been provided that can be produced using known systems and techniques.

The invention thus conceived is susceptible of numerous modifications and variations, if these are within the scope of the appended claims.

Where technical features mentioned in any claim are followed by reference signs, such reference signs have been inserted for the sole purpose of increasing the intelligibility of the claims and accordingly such reference signs do not have any limiting effect on the interpretation of each element identified by way of example by such reference signs.

## Claims

1. A telescopic bicycle kickstand structure (10), of the type comprising a bracket (11) for fixing to the lower part of a bicycle frame, the bracket (11) being articulated to a telescopic leg (12) with a foot (13) for resting on the ground, said telescopic leg (12) comprising a first element (14) which is coupled to said bracket (11), and a second element (15) which can be telescopically extended from said first element (14) and comprises said foot (13), reversible means (34) being present for locking the position of the second element (15) with respect to the first (14), said first element (14) comprising a first part (16) which is hinged to the bracket (11); said first part (16) being constituted in turn by a hinged head (17) from which a clutch portion (18) extends which is shaped to be pressed into a second, tubular part (19) of said first element (14), an upper sleeve (20) being provided for protecting the leg (12), in the lowered configuration of use, from impacts by an improperly-rotated pedal crank of the bicycle, the bicycle kickstand structure being **characterized in that** said upper sleeve (20) is locked between said first part (16) and said second part (19) of said first element (14), so as to surround the region of coupling between said clutch portion (18) and a first section of said second part (19), said sleeve (20) having one end (21) which is shaped so as to complement an abutment portion (22) which is defined on said hinged head (17), and on its inside having corresponding contiguous tubular seats (23, 24), a first seat (23) for the section (18a) of said clutch portion (18) which remains outside said second part (19), and a second seat (24) for an end section (25) of said second part (19), the inner shoulder (26) which is formed by the difference in section between said tubular seats (23, 24) defining an anti-unthreading abutment for said sleeve (20) in the direction of removal from the hinged head (17).

2. The structure according to the claim 1, **characterized in that** said locking means are formed by a screw (34) which is screwed in a substantially radial direction into a corresponding complementarily threaded hole (28) defined on a wall (27) of said tubular second part (19), so as to be screwed against a tubular element (29) of the second element (15) of the leg (13), the head of said screw (34) being arranged so as to slide inside a protective slot (30) which is defined in a lower sleeve (31) which is associated with said foot (13).

3. The structure according to the preceding claims, **characterized in that** said tubular element (29) of the second element (15) of the leg (13) is pressed, with an end (32) thereof, onto a corresponding clutch (33) which is defined inside said lower sleeve (31).

4. The structure according to the preceding claims, **characterized in that** said lower sleeve (31) and said foot (13) form a single body, made of plastic material.

5. The structure according to the preceding claims, **characterized in that** said upper sleeve (20) for protecting the foot (13) is made by molding of plastic material.

## Patentansprüche

1. Eine teleskopische Fahrradkippständerstruktur (10), von der Art, die einen Bügel (11) zur Befestigung am unteren Teil eines Fahrradrahmens umfasst, wobei der Bügel (11) gelenkig mit einem ausziehbaren Bein (12) mit einem Fuß (13) zum Abstützen auf dem Boden verbunden ist, wobei das ausziehbare Bein (12) ein erstes Element (14) aufweist, das mit dem Bügel (11) gekoppelt ist, und ein zweites Element (15), das teleskopisch von dem ersten Element (14) ausgezogen werden kann und den Fuß (13) aufweist, wobei reversible Mittel (34) vorhanden sind, um die Position des zweiten Elements (15) im Verhältnis zum ersten (14) festzusetzen, und das erste Element (14) einen ersten Teil (16) aufweist, der gelenkig mit dem Bügel (11) verbunden ist; wobei der erste Teil (16) wiederum in einem schwenkbaren Kopf (17) besteht, von dem sich ein Kupplungsabschnitt (18) erstreckt, der geformt ist, um in ein zweites, rohrförmiges Teil (19) des ersten Elements (14) gepresst zu werden, wobei eine obere Hülse (20) bereitgestellt ist, um das Bein (12), in der abgesenkten Gebrauchsanordnung, vor Stößen durch eine inkorrekt gedrehte Tretkurbel des Fahrrads zu schützen, wobei die Fahrradkippständerstruktur **dadurch gekennzeichnet ist, dass** die obere Hülse (20) zwischen dem ersten Teil (16) und dem zweiten Teil (19) des ersten Elements (14) festgesetzt wird, um so den Kopplungsbereich zwischen dem Kupplungsabschnitt (18) und einem ersten Abschnitt des zweiten Teils (19) zu umgeben, wobei die Hülse (20) ein Ende (21) hat, das geformt ist, um einen Widerlagerabschnitt (22) zu ergänzen, der an dem schwenkbaren Kopf (17) bestimmt ist, und an ihrer Znnenseite entsprechende benachbarte rohrförmige Sitze (23, 24) hat, einen ersten Sitz (23) für den Abschnitt (18a) des Kupplungsabschnitts (18), der außerhalb des zweiten Teils (19) bleibt, und einen zweiten Sitz (24) für einen Endabschnitt (25) des zweiten Teils (19), wobei die innere Schulter (26), die durch die Differenz im Querschnitt zwischen den rohrförmigen Sitzen (23, 24) gebildet wird, ein Widerlager gegen das Herausschrauben für die Hülse (20) in Richtung des Abnehmens vom schwenkbaren Kopf (17) bestimmt.

2. Die Struktur gemäß Anspruch 1, **dadurch gekennzeichnet, dass** die Festsetzmittel von einer Schraube (34) gebildet werden, die in einer im Wesentlichen radialen Richtung in ein entsprechendes komplementär mit einem Gewinde versehenes Loch (28) eingeschraubt werden, das in einer Wand (27) des rohrförmigen zweiten Teils (19) geformt ist, um so gegen ein rohrförmiges Element (29) des zweiten Elements (15) des Beins (13) geschraubt zu werden, wobei der Kopf der Schraube (34) angeordnet ist, um in einem Schutzschlitz (30) zu gleiten, welcher in einer unteren Hülse (31) bestimmt ist, die mit dem Fuß (13) verbunden ist.

3. Die Struktur gemäß den obigen Ansprüchen, **dadurch gekennzeichnet, dass** das rohrförmige Element (29) des zweiten Elements (15) des Beins (13) mit einem Ende (32) davon auf eine entsprechende Kupplung (33) gepresst wird, die innerhalb der unteren Hülse (31) geformt ist.

4. Die Struktur gemäß den obigen Ansprüchen, **dadurch gekennzeichnet, dass** die untere Hülse (31) und der Fuß (13) einen einzigen Körper bilden, der aus Kunststoffmaterial besteht.

5. Die Struktur gemäß den obigen Ansprüchen, **dadurch gekennzeichnet, dass** die obere Hülse (20) zum Schützen des Fußes (13) durch Formen von Kunststoffmaterial hergestellt wird.

## Revendications

1. Structure télescopique de béquille de bicyclette (10), du type comprenant un support (11) destiné à être fixé sur la partie inférieure d'un cadre de bicyclette, le support (11) étant articulé par rapport à une tige télescopique (12) dotée d'un pied (13) qui repose sur le sol, ladite jambe télescopique (12) comprenant un premier élément (14) qui est couplé audit support (11), et un second élément (15) qui peut se déployer de manière télescopique à partir dudit premier élément (14) et qui comprend ledit pied (13), un moyen réversible (34) étant présent pour verrouiller la position du second élément (15) par rapport au premier élément (14), ledit premier élément (14) comprenant une première partie (16) qui est articulée par rapport au support (11) ; ladite première partie (16) étant constituée à son tour par une tête articulée (17) à partir de laquelle s'étend une portion d'embrayage (18) qui est façonnée pour être pressée dans une seconde partie tubulaire (19) dudit premier élément (14), un manchon supérieur (20) étant prévu pour protéger la tige (12), suivant la configuration abaissée d'utilisation, de chocs dus à une manivelle de pédale de la bicyclette tournée de manière inappropriée, la structure de béquille de bicyclette étant **caractérisée en ce que** ledit manchon supérieur (20) est verrouillé entre ladite première partie (16) et ladite seconde partie (19) dudit premier élément (14), de manière à entourer la zone de couplage entre ladite portion d'embrayage (18) et une première section de ladite seconde partie (19), ledit manchon (20) présentant une extrémité (21) qui est façonnée de manière à compléter une portion de butée (22) qui est définie sur ladite tête articulée (17), et présentant sur son intérieur des sièges tubulaires contigus correspondants (23, 24), un premier siège (23) pour la section (18a) de ladite portion d'embrayage (18) qui reste à l'extérieur de ladite seconde partie (19), et un second siège (24) pour une section d'extrémité (25) de ladite seconde partie (19), l'épaulement intérieur (26) qui est constitué par la différence de section entre lesdits sièges tubulaires (23, 24) définissant une butée anti-dévissage dudit manchon (20) dans la direction de retrait à partir de la tête articulée (17).

2. Structure selon la revendication 1, caractérisée en ce lesdits moyens de verrouillage sont constitués par une vis (34) qui est vissée dans une direction sensiblement radiale dans un trot fileté de manière complémentaire correspondant (28) défini dans une paroi (27) de ladite seconde partie tubulaire (19), de manière à être vissée contre un élément tubulaire (29) du second élément (15) de la tige (13), la tête de ladite vis (34) étant agencée de manière à coulisser à l'intérieur d'une fente de protection (30) qui est définie dans un manchon inférieur (31) qui est associé audit pied (13).

3. Structure selon les revendications précédentes, **caractérisée en ce que** ledit élément tubulaire (29) du second élément (15) de la tige (13) est pressé, avec une extrémité (32) de celui-ci, sur un embrayage correspondant (33) qui est défini à l'intérieur dudit manchon inférieur (31).

4. Structure selon les revendications précédentes, **caractérisée en ce que** ledit manchon inférieur (31) et ledit pied (13) constituent un corps unique, fabriqué à partir d'un matériau plastique.

5. Structure selon les revendications précédentes, **caractérisée en ce que** ledit manchon supérieur (20) destiné à protéger le pied (13), est fabriqué par moulage d'un matériau plastique.
